# EUROPEAN PATENT SPECIFICATION

(11) **EP 0 502 584 B1**
(45) Date of publication and mention of the grant of the patent: **29.05.1996**
(21) Application number: 92200616.8
(22) Date of filing: 03.03.1992
(51) Int. Cl.: A01K 11/00

(54) **Identification tag for animals**
Identifikationsmarke für Tiere
Etiquette d'identification d'animaux

(30) Priority: 05.03.1991 BE 9100208
(43) Date of publication of application: 09.09.1992
(73) Proprietor: Splitthoff, Josef, D-46419 Isselburg (DE); Tansens, Laurette, B-9800 Deinze (BE)
(72) Inventor: Splitthoff, Josef, D-46419 Isselburg (DE); Tansens, Laurette, B-9800 Deinze (BE)
(74) Representative: Leherte, Georges M.L.M.

(56) References cited:
- EP-A- 0 138 629
- EP-A- 0 142 195
- WO-A-90/06050

## Description

The present invention relates to an identification tag which is attached to the body, preferably to one of the ears, of an animal.

Everywhere that large numbers of animals of the same type are assembled, but especially in stock breeding for good management of the business, it is necessary in order to be able to distinguish the different animals from each other. In order to render the identification of the different animals possible in a fast, easy and clear manner, it is usual that one or another means of identification is applied or attached to their body.

A well-known means of identification for animals, consists of a tag or label, or similar means, that is attached clearly visible to the body of the animal, and on which information, for example a number, is recorded, which is different for each animal, and which permits fast and easy identification of each animal.

Such known identification tags are described in the patents GB-A-2119319 and FR-A-2304132, and preferably consist of two flat, plate shaped pieces manufactured from flexible plastic, of which at least one bears the above mentioned information on a flat side.

One part - the male part - has perpendicular to the plate shaped part an extending pin with a cylindrical shaft and a pointed elongated conical head with a maximum diameter which is greater than the diameter of the cylindrical shaft, by which a circular extending edge is formed at the height of the connection between the head and the shaft of the pin.

The other part - the female part - comprises a cylindrical bore which has a greater diameter on one side of the plate shaped part than on the other side, whereby this change of diameter forms a circular edge in the bore. The smallest diameter of the bore corresponds to the diameter of the shaft, while the width of the circular edge, internal in the bore, corresponds to the width of the circular edge at the height of the connection between the head and the shaft of the pin.

With the attachment of the identification tag to an ear of the animal, the pin is driven through the ear with the assistance of a pair of pincers especially provided for that purpose. The female part is placed on the other side with the side where the bore has the smallest diameter directed towards the ear. At the moment the head of the pin appears on the other side of the ear, this is inserted on that side into the bore, by deformation of the material. The result is that the entire head comes to rest in the part of the bore with the greatest diameter. This diameter corresponds to the maximum diameter of the head. The edge which is formed by the connection between the head and the shaft of the pin now lies against the edge of the bore, through which the head can no longer leave the bore on the side of the ear. Both parts of the tag now form one unit on both side of the ear via the shaft. Furthermore the plate shaped part which bears the necessary information is on the outside of the ear, so that it is clearly visible. The identification of the animals is therefore made possible in that manner.

Another identification tag for animals is known from WO-A-90/06050, and comprises a female part provided with a bore having an inner ring body, and a male part with a pin which is insertable in the bore of the female part. The pin is provided with an insertion member in form of a tip, whereas the inner ring body comprises a plurality of vaulted locking webs, projecting towards the centre of the metal ring body and capable of engaging the pin behind the insertion member. When the male part and the female part are assembled, the pin is mechanically locked in the bore.

One or more safety wires are embedded in the male part and/or the female part, said safety wires ensuring or marking that the identification tag has been correctly assembled. By means of a suitable equipment, it is possible to ensure that the safety wires are intact. So, an increased security against falsification is obtained.

Nevertheless these known embodiments of identification tags have considerable disadvantages. A first disadvantage lies in the fact that the conical form of the head of the pin of the male part, with which a hole is made in the ear, tears open the ear in a rather painful manner for the animal. Another disadvantage lies in the simple blocking of the head of the pin in the bore of the female part. When the animals hook onto protruding objects with the tag or exert a great force thereupon in one way or another, the head of the pin comes loose from the bore rather quickly. This results in the animals losing their identification tag. On the other hand the identification tag may no longer be removed without rendering it unusable, in order to comply with certain legislations and/or control provisions in stock breeding. This too easily removable lock obviously does not satisfy this requirement.

Yet another disadvantage lies in the non-optimum angle of the pointed head. Because of that the penetration of that pin through the ear is not effected very well, which again is most painful for the animal. Another disadvantage lies in the possibility that infections can arise with the attachment of the tags.

The purpose of the present invention is to remedy these disadvantages.

The identification tag for animals according to the invention has as characteristic that the male and female parts are clinched to each other by a double lock defined by the features of claim 1.

Furthermore the identification tag for animals according to the invention is characterized in that it is composed of an impact-resistant and hard plastic which complies with the standards of materials which come into contact with foodstuffs.

Other characteristics and advantages will appear from the description of an identification tag for animals according to the invention with the assistance of the attached figures.
Figure 1 is a front view of an identification tag.
Figure 2 is a cross-section of the various elements of an identification tag according to the invention separated from each other.

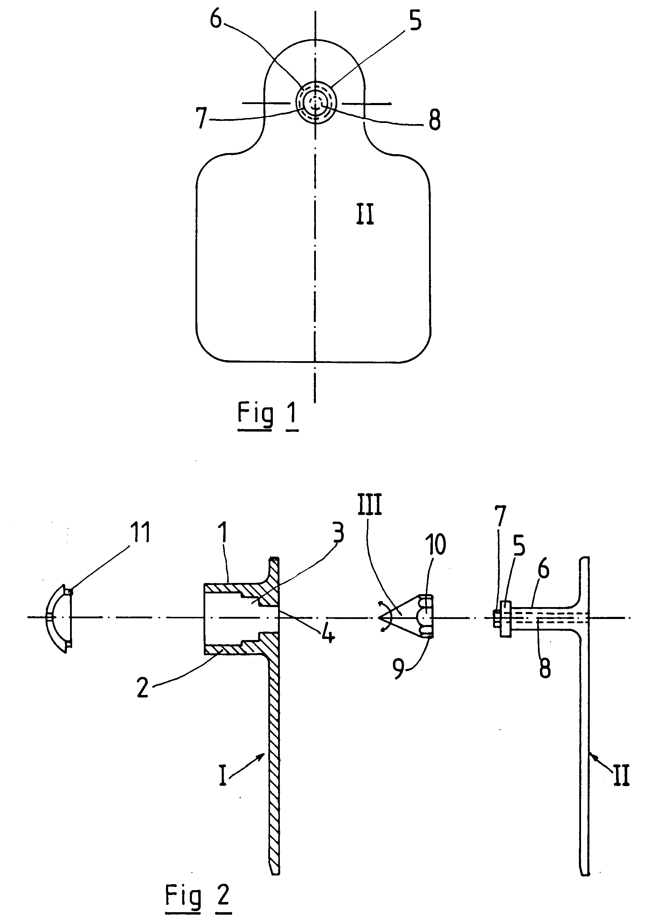

An identification tag for animals as represented in figure 1 has a surface on which the identification characters appear. These characters are of such nature that they cannot later become unreadable through weather conditions or through rubbing.

This identification tag for animals according to the invention is composed of two parts I and II - respectively a female and male part - preferably manufactured from an impact-resistant and hard plastic.

With the identification tag for animals as represented in figure 2, the female part I is formed of a flat plate shaped part of impact-resistant and hard plastic that complies with the statutory standards for materials which come into contact with foodstuffs, and on which the identification characters are applied. On the edge of this flat tag a small cylindrical tube (1) is provided, with a triple bore (2) (3) and (4), with a degressive diameter whereby bore (2) is greater than (3), and (3) greater than (4).

On the other hand the male part II, is also formed of a flat tag, which will come to lie against the ear of the animal, and is provided on its edge, which can also be produced rounded off, with an extending cylindrical shaft (6), of flexible material. At a small distance from the extremity of this shaft (6) a laterally extending collar (5) is provided, which is welded to the cylindrical shaft (6). On this cylindrical shaft (6) of the male part II then comes a conical head III, of which the base (9) has a certain thickness, in which a hollow (10) is bored which can perfectly connect onto the extremity (7) of the cylindrical shaft (6) to against the collar (5) of the male part II.

On the other hand this base (9) of the conical head III has a polygonal outer surface, preferably octagonal, with a diameter which is greater than the middle bore (3), but is smaller than the largest bore (2) of the small cylindrical tube (1) of the female part I.

This conical head III of impact-resistant and hard plastic which complies with the standards for materials which come into contact with foodstuffs, has a point with an angle of between 55° and 65° and preferably of 60°.

The small cylindrical tube (1) of the female part I can preferably be closed off by a cap (11), which like the conical head III is welded to the cylindrical shaft (6) of the male part II, by means of ultrasonic waves.

Both the cap (11) and the cylindrical shaft (6) of respectively the female I and the male part II are then also preferably provided with central air channels.

When the male part (2) is driven through the ear of the identified animal, the conical head III goes into the largest bore (2) of the small cylindrical tube (1) of the female part I while the collar (5) of the male part II occupies the space in the middle bore (3) of the female part I on the open side, and the cylindrical shaft (6) sits in the space (4).

Through the use of identification tags, according to the invention, the animal experiences less pain, and it gets no chance of getting the identification tag loose. Also the identification tag, according to the invention, can only be used once, which also offers advantages against possible deceit.

## Claims

1. Identification tag for animals, comprising a female part (I) having a bore (2,3,4), and a male part (II) having a pin (6) which is insertable into the bore (2,3,4), said bore (2,3,4) and said pin (6) being provided with means for mechanically locking the pin (6) in the bore (2,3,4), **characterised in that** the bore (2,3,4) is provided with two axially displaced retaining rims; and that the pin (6) is provided with two axially displaced projecting elements (III, 5); such that each retaining rim can cooperate with a projecting element (III, 5) in order to prevent the pin (6) from being pulled out of the bore (2,3,4).

2. Identification tag according to claim 1, **characterised in that** the female part (I) is provided with a triple bore (2), (3) and (4), with a degressive diameter whereby bore (2) is greater than (3), and bore (3) is greater than (4), while the male part (II) is provided with a pin with projecting elements which fit into these three bores (2), (3) and (4) of the female part.

3. Identification tag according to claim 2, **characterised in that** the male part which is provided with a drawing out cylindrical shaft (6) which is provided with a collar (5) at a small distance from its extremity, and on which the conical head (III) sits which is attached to the extremity (7) of the cylindrical shaft (6), so that with the clinching of both parts of the identification tag the conical head (III) occupies the space of bore (2), of the female part, the collar (5) the space of the bore (3), and the cylindrical shaft (6) the space of the bore (4).

4. Identification tag according to claim 3 **characterised in that** the conical head (III) of impact-resistant and hard plastic is attached to the cylindrical shaft (6) by means of ultrasonic waves.

5. Identification tag according to claims 3 or 4 **characterised in that** the conical head has a point with an angle of between 55° and 65°, and preferably of 60°.

6. Identification tag according to claims 3, 4 or 5 **characterised in that** the conical head is provided with a base (9) with a central intermediate hollow (10) which connects to the diameter of the extremity (7) of the cylindrical shaft (6).

7. Identification tag according to claims 3, 4, 5 or 6 **characterised in that** the base (9) of the conical head has a polygonal outer surface, preferably octagonal.

8. Identification tag according to claim 2 **characterised in that** the small cylindrical tube (1) of the female part (I) is closed off with a cap (11), which is preferably welded on by ultrasonic waves, whether or not provided with an axial air channel.

9. Identification tag according to claims 1 up to and including 8, **characterised in that** the cylindrical shaft (6) of the male part (II) is provided with an axial air channel (8).

10. Identification tag according to claims 1 up to and including 9 **characterised in that** the elements used are made from impact-resistant and hard plastic, that complies with the standards for the materials which come into contact with foodstuffs.

## Patentansprüche

1. Eine Kennmarke für Tiere, mit einem aufnehmenden Teil (I) mit einer Bohrung (2,3,4) und einem einzuführenden Teil (II) mit einem Stift (6), der in die Bohrung (2,3,4) eingefügt werden kann, wobei die besagte Bohrung (2,3,4) und der besagte Stift (6) mit der Möglichkeit des mechanischen Verschlusses des Stiftes (6) in der Bohrung (2,3,4) versehen sind, mit dem Merkmal, daß die Bohrung (2,3,4) mit zwei axial versetzten Halterändern versehen ist, und, daß der Stift (6) so mit zwei axial versetzten vorspringenden Elementen (III, 5) versehen ist, daß jeder Halterand mit einem vorspringenden Element (III, 5) zusammenwirken kann, um zu verhindern, daß der Stift (6) aus der Bohrung (2,3,4) gezogen wird.

2. Eine Kennmarke laut Anspruch 1, mit dem Merkmal, daß das aufnehmende Teil (I) mit einer dreifachen Bohrung (2), (3) und (4) mit abnehmendem Durchmesser versehen ist, wobei Bohrung (2) größer als (3), und Bohrung (3) größer als (4) ist, während das einzuführende Teil (II) mit einem Stift mit vorspringenden Elementen versehen ist, die für die Aufnahme in diese drei Bohrungen (2), (3) und (4) des aufnehmenden Teils vorgesehen sind.

3. Eine Kennmarke laut Anspruch 2, mit dem Merkmal, daß das einzuführende Teil mit einem nach außen gerichteten zylinderförmigem Schaft (6) versehen ist, der mit einem Ring (5) versehen ist, der dicht an seinem Ende liegt, an dem sich der konische Kopf (III) befindet, an den das Ende (7) des zylinderförmigen Schafts (6) befestigt ist, so daß beim Zusammenpressen der beiden Teile der Kennmarke der konische Kopf (III) in den Raum von Bohrung (2) des aufnehmenden Teils, der Ring (5) in den Raum von Bohrung (3) und der zynlinderförmige Schaft (6) in den Raum von Bohrung (4) kommt.

4. Eine Kennmarke laut Anspruch 3, mit dem Merkmal, daß der konische Kopf (III) aus schlagfestem und hartem Kunststoff mit Ultraschallwellen an dem zylinderförmigen Schaft (6) befestigt ist.

5. Eine Kennmarke laut Anspruch 3 oder 4, mit dem Merkmal, daß der konische Kopf eine Spitze mit einen Winkel zwischen 55 und 65 Grad, vorzugsweise von 60 Grad aufweist.

6. Eine Kennmarke laut Anspruch 3, 4 oder 5, mit dem Merkmal, daß der konische Kopf mit einer Basis (9) mit einer zentralen Zwischenaushöhlung (10) versehen ist, die an den Durchmesser des Endes (7) des zylinderförmigen Schafts (6) anschließt.

7. Eine Kennmarke laut Anspruch 3,4, 5 oder 6, mit dem Merkmal, daß die Basis (9) des konischen Kopfes eine mehreckige, vorzugsweise achteckige Außenfläche aufweist.

8. Eine Kennmarke laut Anspruch 2, mit dem Merkmal, daß das kleine zylinderförmige Rohr (1) des aufnehmenden Teils (I) mit einer Kappe (11) verschlossen wird, die vorzugsweise mit Ultraschallwellen aufgeschweißt wird und mit einem axialen Luftkanal versehen werden kann.

9. Eine Kennmarke laut einem der Ansprüche 1 bis einschließlich 8, mit dem Merkmal, daß der zylinderförmige Schaft (6) des einzuführenden Teils (II) mit einem axialen Luftkanal (8) versehen ist.

10. Eine Kennmarke laut einem der Ansprüche 1 bis einschließlich 9, mit dem Merkmal, daß die Elemente aus schlagfestem und hartem Kunststoff gefertigt sind, das den Normen für Materialien in Kontakt mit Lebensmitteln entspricht.

## Revendications

1. Etiquette d'identification pour animaux comprenant une partie femelle (I) possédant un trou (2, 3, 4) et une partie mâle (II) possédant une broche (6) qui peut être insérée dans le trou (2, 3, 4), ledit trou (2, 3, 4) et ladite broche (6) étant pourvus de moyens pour verrouiller mécaniquement la broche (6) dans le trou (2, 3, 4), caractérisée en ce que le trou (2, 3, 4) est pourvu de deux rebords de retenue déplacés axialement et en ce que la broche (6) est pourvue de deux éléments en saillie déplacés axialement (III, 5) de telle sorte que chaque rebord de retenue puisse coopérer avec un élément en saillie (III, 5) afin d'empêcher que la broche (6) ne puisse être extraite du trou (2, 3, 4).

2. Etiquette d'identification selon la revendication 1, caractérisée en ce que la partie femelle (I) est pourvue d'un triple trou (2), (3) et (4) d'un diamètre dégressif, où le trou (2) étant supérieur au trou (3) et le trou (3) étant supérieur au trou (4) tandis que la partie mâle (II) est pourvue d'une broche possédant des éléments en saillie qui s'insèrent dans ces trois trous (2), (3) et (4) de la partie femelle.

3. Etiquette d'identification selon la revendication 2, caractérisée en ce que la partie mâle qui est pourvue d'un axe cylindrique étiré (6) muni d'une bride (5) à une faible distance de son extrémité et sur laquelle est logée la tête conique (III) qui est fixée à l'extrémité (7) de l'axe cylindrique (6) de sorte qu'avec le coincement des deux parties de l'étiquette d'identification, la tête conique (III) occupe l'espace du trou (2) de la partie femelle, la bride (5) l'espace du trou (3) et l'axe cylindrique (6) l'espace du trou (4).

4. Etiquette d'identification selon la revendication 3, caractérisée en ce que la tête conique (III) en matériau plastique dur résistant aux chocs est fixée à l'axe cylindrique (6) au moyen d'ondes ultrasoniques.

5. Etiquette d'identification selon l'une quelconque des revendications 3 ou 4, caractérisée en ce que la tête conique possède une pointe dans un angle de 55 à 65°, de préférence de 60°.

6. Etiquette d'identification selon l'une quelconque des revendications 3, 4 ou 5, caractérisée en ce que la tête conique est pourvue d'une base (9) avec un creux intermédiaire central (10) qui se raccorde au diamètre de l'extrémité (7) de l'axe cylindrique (6).

7. Etiquette d'identification selon l'une quelconque des revendications 3, 4, 5 ou 6, caractérisée en ce que la base (9) de la tête conique possède une surface externe polygonale, de préférence octogonale.

8. Etiquette d'identification selon la revendication 2, caractérisée en ce que le petit tube cylindrique (1) de la partie femelle (I) est fermé à l'aide d'un bouchon (11) qui est de préférence soudé par des ondes ultrasoniques, qu'il soit ou non pourvu d'un canal d'air axial.

9. Etiquette d'identification selon l'une quelconque des revendications 1 à 8 incluse, caractérisée en ce que l'axe cylindrique (6) de la partie mâle (II) est pourvu d'un canal d'air axial (8).

10. Etiquette d'identification selon l'une quelconque des revendications 1 à 9 incluse, caractérisée en ce que les éléments utilisés sont fabriqués en plastique dur résistant aux chocs qui est conforme aux normes pour les matériaux en contact avec des denrées alimentaires.
